# EUROPEAN PATENT SPECIFICATION

(11) **EP 3 770 285 B1**
(45) Date of publication and mention of the grant of the patent: **20.03.2024**
(21) Application number: 19772207.7
(22) Date of filing: 26.02.2019
(51) Int. Cl.: C21D 1/10, C21D 1/60, C21D 9/28, H05B 6/10, C21D 9/00, H05B 6/44, H05B 6/40

(54) **TRAVERSE HARDENING DEVICE AND TRAVERSE HARDENING METHOD**
VORRICHTUNG ZUM HÄRTEN EINER TRAVERSE UND VERFAHREN ZUM HÄRTEN EINER TRAVERSE
DISPOSITIF DE DURCISSEMENT TRAVERSANT ET PROCÉDÉ DE DURCISSEMENT TRAVERSANT

(30) Priority: 23.03.2018 JP 2018056071
(43) Date of publication of application: 27.01.2021
(73) Proprietor: NIPPON STEEL CORPORATION, Chiyoda-ku Tokyo 100-8071 (JP)
(72) Inventor: YAMANE, Akihito, Tokyo 100-8071 (JP); HATA, Toshiyuki, Tokyo 100-8071 (JP); KOZUKA, Chihiro, Tokyo 100-8071 (JP)
(74) Representative: Zimmermann & Partner Patentanwälte mbB
(86) International application number: PCT/JP2019/007269
(87) International publication number: WO 2019/181382

(56) References cited:
- CN-U- 202 116 607
- JP-A- S5 095 827
- JP-A- S5 095 827
- JP-A- S6 024 324
- JP-A- 2001 026 824
- JP-A- 2015 108 188
- JP-A- 2015 108 188
- JP-A- 2016 089 182
- JP-A- 2016 089 182

## Description

### [Technical Field of the Invention]

The present invention relates to a traverse hardening device and a traverse hardening method.

### [Related Art]

In related art, traverse hardening is performed on a shaft-shaped body by induction heating to increase a fatigue strength of the shaft-shaped body. The "traverse hardening" as used herein means hardening the shaft-shaped body while moving a coil member or the like in an axial direction with respect to the shaft-shaped body.

In induction heating, a shaft-shaped body is inserted into a primary coil member formed in an annular shape, and a high frequency current flows through the primary coil member to heat the shaft-shaped body by induction heating. In the induction heating, as a distance (air gap) between the shaft-shaped body and a primary coil member decreases, the shaft-shaped body is more efficiently heated. Therefore, in a case where the shaft-shaped body includes a main body portion and a small-diameter portion which is provided in the main body portion and has an outer diameter smaller than that of the main body portion, there is a problem that the small-diameter portion is less likely to be heated than the main body portion.

In order to solve this problem, there has been proposed a traverse hardening device including a secondary coil member which has an outer diameter smaller than an inner diameter of the primary coil member inside the primary coil member (for example, refer to Patent Documents 1 to 3). The secondary coil member is formed in an O shape or a C shape.

In the traverse hardening device, the plurality of coil members are disposed concentrically, and thus, the air gap is uniform in a circumferential direction. Since it is possible to use a coil member having a large number of turns and good current efficiency, it is possible to efficiently heat the shaft-shaped body evenly with a small current.

Patent Document 4 discloses to execute moving-hardening to the outer peripheral surface of a bar-like work arranged with a larger diameter part at part in the axial direction into a uniform depth to the vicinity of the large diameter part. A complex coil composed of a primary coil 21 for induction- heating the outer peripheral surface of the bar-like work 10 and a secondary coil 22 for cancelling part of the current flowing in the primary coil 21 with an induction current from the primary coil 21 is used as the induction heating coil 20. The induction heating coil 20 is shifted in a state the front part of the secondary coil 22 is projecting toward the front part of the primary coil 21 to heat the outer peripheral surface of the bar-like work 10 sequentially. When the secondary coil 22 reaches the close vicinity of the large diameter part 11, the shifting of the secondary coil 22 is stopped, and only the primary coil 21 is successively shifted. The vicinity of the large diameter part 11 is intensively heated with the front part of the secondary coil 22. Also while stopping the secondary coil 22 is stopped, the shifting of the primary coil 21 continues, and the temporary stop of the cooling jacket 30 advanced by following the advance of the primary coil 21 is avoided.

Patent Document 5 discloses a quenching induction coil for stepped shafts, which comprises a coil made of copper tubes. The coil consists of two portions, diameters of adjacent turns of the first portion of the coil are different, a helix angle of the first portion of the coil is smaller than 5 degrees, diameters of adjacent turns of the second portion of the coil are identical, and a helix angle of the second portion of the coil is larger than 5 degrees. Another scheme of the quenching induction coil includes that two portions are compounded to form the coil, a plurality of notch rings are connected onto a radial plane end to end so as to form the first portion of the coil, diameters of adjacent turns of the notch rings are different, a plurality of notch rings are connected onto a cylindrical plane end to end so as to form the second portion of the coil, diameters of adjacent turns of the notch rings are identical, and a magnetizer is mounted on the outside of the coil. The quenching induction coil can solve the problem that heating temperature is uneven when an induction coil of induction heating equipment realizes quenching induction on a diameter transitional portion with large diameter change of a half shaft of an automobile and a small-diameter end of the half shaft.

### [Prior Art Document]

### [Patent Document]

[Patent Document 1] Japanese Examined Patent Application, Second Publication No. S52-021215
[Patent Document 2] Japanese Unexamined Patent Application, First Publication No. 2015-108188
[Patent Document 3] Japanese Unexamined Patent Application, First Publication No. 2000-87134
[Patent Document 4] JP 2001 026824 A
[Patent Document 5] CN 202116607

### [Disclosure of the Invention]

### [Problems to be Solved by the Invention]

In all of the traverse hardening devices disclosed in Patent Documents 1 to 3, the shaft-shaped body having the small-diameter portion at an end portion in the axial direction is a heating target. However, in a case where the small-diameter portion of the shaft-shaped body is provided in a middle portion of the shaft-shaped body in the axial direction, there is a problem that it takes time to move the secondary coil member attached to the small-diameter portion to an end of the shaft-shaped body in the axial direction and remove the secondary coil member from the shaft-shaped body.

The present invention is made in consideration of such a problem, and an object thereof is to provide a traverse hardening device and a traverse hardening method capable of easily removing a secondary coil member from a shaft-shaped body in which a small-diameter portion having an outer diameter smaller than that of a main body portion of the shaft-shaped body is provided in a middle portion of the shaft-shaped body in an axial direction.

### [Means for Solving the Problem]

In order to achieve the object, the present invention proposes the following aspects.

According to an aspect of the present invention, there is provided a traverse hardening device for performing traverse hardening on a shaft-shaped body, the shaft-shaped body including a main body portion and a small-diameter portion which is provided in a middle portion of the main body portion in an axial direction and has an outer diameter smaller than that of the main body portion, the traverse hardening device including: a primary coil member which is formed in an annular shape, through which a high frequency current flows, and into which the shaft-shaped body is inserted; and a plurality of secondary coil members, having an outer diameter smaller than an inner diameter of the primary coil member, which are disposed inside the primary coil member, on a radially outer side of the small-diameter portion of the shaft-shaped body, and are disposed to be separated from each other in a circumferential direction.

According to this aspect, the plurality of secondary coil members separated from each other in advance are disposed radially outside the small-diameter portion of the shaft-shaped body so as to be separated from each other in the circumferential direction.

A high frequency current flows through the primary coil member which moves in the axial direction with respect to the shaft-shaped body. Then, with respect to the main body portion of the shaft-shaped body, an induction current is generated in the main body portion by electromagnetic induction of the primary coil member, and Joule heat is generated in the main body portion by an electric resistance of the main body portion. For example, the main body portion heated by the Joule heat is cooled by a cooling unit which moves in the axial direction after the primary coil member, and thus, the traverse hardening is performed on the main body portion.

With respect to the small-diameter portion of the shaft-shaped body, the induction current is generated in the small-diameter portion of the shaft-shaped body through the secondary coil member disposed radially outside the small-diameter portion by the electromagnetic induction, and thus, Joule heat is generated in the small-diameter portion by the electric resistance of the small-diameter portion. Similarly, the small-diameter portion heated by Joule heat is cooled, and the traverse hardening is performed on the small-diameter portion. After the traverse hardening on the small-diameter portion ends, the plurality of secondary coil members are removed radially outward from the small-diameter portion. The secondary coil member may be removed before the small-diameter portion is cooled, and from the viewpoint of cooling efficiency, it is desirable that secondary coil member is removed before the small-diameter portion is cooled.

When the plurality of secondary coil members are removed, if the plurality of secondary coil members are moved radially outward from the small-diameter portion, the plurality of secondary coil members are removed from the small-diameter portion. Accordingly, the secondary coil member can be easily removed from the shaft-shaped body.

In the traverse hardening device described in the above aspect, a diameter of an inscribed circle which is in contact with each outer surface of the plurality of secondary coil members facing an axis of the main body portion may be smaller than the outer diameter of the main body portion.

According to this aspect, the plurality of secondary coil members can be brought closer to the small-diameter portion, and thus, the small-diameter portion can be more efficiently heated by the plurality of secondary coil members.

In the traverse hardening device describedeither aspect above, a plurality of secondary first coil members and a plurality of secondary second coil member may be provided as the plurality of secondary coil members, each of the plurality of secondary first coil members may include a first support piece extending from each of the plurality of secondary first coil members toward one side in the axial direction, and each of the plurality of secondary second coil members may include a second support piece extending from each of the plurality of secondary second coil members toward the other side in the axial direction.

In the traverse hardening device according to any one of the above aspects, the shaft-shaped body may include a second small-diameter portion which is provided in the small-diameter portion and has an outer diameter smaller than that of the small-diameter portion, the traverse hardening device may further include: a first connection piece which extends radially outward from each of the plurality of first support pieces; a plurality of tertiary coil members which, are disposed radially inside the plurality of secondary coil members, on the radially outer side of the second small-diameter portion of the shaft-shaped body, and are disposed to be separated from each other in the circumferential direction; a third support piece which is provided in each of the plurality of tertiary coil members and extends from each of the plurality of tertiary coil members toward one side in the axial direction; and a third connection piece which extends radially outward from each of the plurality of third support pieces, in which circumferential positions of the plurality of third connection pieces may be different from circumferential positions of the plurality of first connection pieces.

According to this aspect, when the plurality of tertiary coil members are disposed radially outside the second small-diameter portion and the plurality of secondary coil members are further disposed radially outside the plurality of tertiary coil members, the plurality of first connection pieces and the plurality of third connection pieces can be prevented from interfering from each other.

According to another aspect of the present invention, there is provided a traverse hardening method for performing traverse hardening on a shaft-shaped body, the shaft-shaped body including a main body portion and a small-diameter portion which is provided in a middle portion of the main body portion in an axial direction and has an outer diameter smaller than that of the main body portion, the traverse hardening method including: a disposition step of disposing a plurality of secondary coil members radially outside the small-diameter portion so that the secondary coil members are separated from each other in a circumferential direction; and a heating step of moving a primary coil member, which is formed in an annular shape, through which a high frequency current flows, and into which the shaft-shaped body is inserted, from a first end portion of the shaft-shaped body toward the small-diameter portion in the axial direction with respect to the shaft-shaped body, disposing at least a portion of each of the plurality of secondary coil members in the primary coil member, wherein the plurality of secondary coil members have an outer diameter smaller than the inner diameter of the primary coil member, and heating the small-diameter portion by induction heating.

According to this aspect, the plurality of secondary coil members separated from each other in advance are disposed radially outside the small-diameter portion of the shaft-shaped body so as to be separated from each other in the circumferential direction.

A high frequency current flows through the primary coil member which moves in the axial direction with respect to the shaft-shaped body. Then, with respect to the main body portion of the shaft-shaped body, an induction current is generated in the main body portion by electromagnetic induction of the primary coil member, and Joule heat is generated in the main body portion by an electric resistance of the main body portion. For example, the main body portion heated by the Joule heat is cooled by a cooling unit which moves in the axial direction after the primary coil member, and thus, the traverse hardening is performed on the main body portion.

Meanwhile, with respect to the small-diameter portion of the shaft-shaped body, the induction current is generated in the small-diameter portion of the shaft-shaped body through the secondary coil member disposed radially outside the small-diameter portion by the electromagnetic induction, and thus, Joule heat is generated in the small-diameter portion by the electric resistance of the small-diameter portion. Similarly, the small-diameter portion heated by Joule heat is cooled, and the traverse hardening is performed on the small-diameter portion. After the traverse hardening on the small-diameter portion ends, the plurality of secondary coil members are removed radially outward from the small-diameter portion. The secondary coil member may be removed before the small-diameter portion is cooled, and from the viewpoint of cooling efficiency, it is desirable that secondary coil member is removed before the small-diameter portion is cooled.

When the plurality of secondary coil members are removed, if the plurality of secondary coil members are moved radially outward from the small-diameter portion, the plurality of secondary coil members are removed from the small-diameter portion. Accordingly, the secondary coil member can be easily removed from the shaft-shaped body.

In the traverse hardening method according to the previous aspect, in the disposition step, the plurality of secondary coil members may be disposed so that an outer diameter of an inscribed circle which is in contact with each outer surface of the plurality of secondary coil members facing an axis of the main body portion is smaller than a diameter of the main body portion.

According to this aspect, the plurality of secondary coil members can be brought closer to the small-diameter portion, and thus, the small-diameter portion can be more efficiently heated by the plurality of secondary coil members.

In the traverse hardening method according to either of the two previous aspects, the traverse hardening method may further include: as the disposition step, a first disposition step of disposing a plurality of secondary first coil members as the plurality of secondary coil members, which respectively have first support pieces extending toward one side in the axial direction which is a movement direction of the primary coil member with respect to the shaft-shaped body, on an end portion of the small-diameter portion on the other side in the axial direction; as the heating step, a first heating step of heating the end portion of the small-diameter portion on the other side in the axial direction when at least a portion of each of the plurality of secondary first coil members is disposed in the primary coil member which relatively moves to one side in the axial direction with respect to the shaft-shaped body; after the first heating step, a separation step of moving the plurality of secondary first coil members with respect to the primary coil member to one side in the axial direction using the first support piece to separate the plurality of secondary first coil members radially outward from the small-diameter portion; as the disposition step, a second disposition step of disposing a plurality of secondary second coil members as the plurality of secondary coil members, which respectively have second support pieces extending toward the other side in the axial direction, on the end portion of the small-diameter portion on one side in the axial direction through an inside of the primary coil member from the other side of the primary coil member in the axial direction; and as the heating step, a second heating step of heating the end portion of the small-diameter portion on one side in the axial direction when at least a portion of each of the plurality of secondary second coil members is disposed in the primary coil member which relatively moves to one side in the axial direction with respect to the shaft-shaped body.

According to this aspect, after the end portion of the small-diameter portion on the other side in the axial direction is heated by the primary coil member and the plurality of secondary first coil members, the plurality of secondary first coil members are moved to one side in the axial direction with respect to the primary coil member using the first support piece. Accordingly, the first support piece is prevented from interfering with the primary coil member moving to one side in the axial direction and the main body portion disposed closer to the other side in the axial direction than the small-diameter portion, the plurality of secondary first coil members are taken out from the inside of the primary coil member, and the plurality of secondary first coil members can be separated radially outward from the small-diameter portion.

Then, after the end portion of the small-diameter portion on one side in the axial direction is heated by the primary coil member and the plurality of secondary second coil members, the plurality of secondary second coil members are moved to the other side in the axial direction with respect to the primary coil member using the second support piece. Accordingly, the second support piece is prevented from interfering with the primary coil member moving to one side in the axial direction and the main body portion disposed closer to one side in the axial direction than the small-diameter portion, the plurality of secondary second coil members are taken out from the inside of the primary coil member, and the plurality of secondary second coil members can be separated radially outward from the small-diameter portion.

### [Effects of the Invention]

According to the traverse hardening device and the traverse hardening method according to each aspect of the present invention, it is possible to easily remove the secondary coil member from the shaft-shaped body in which the small-diameter portion having the outer diameter smaller than that of the main body portion of the shaft-shaped body is provided in the middle portion of the shaft-shaped body in an axial direction.

### [Brief Description of the Drawings]

FIG. 1 is a partially cutaway view of a traverse hardening device according to a first embodiment of the present invention and is a side view schematically illustrating the traverse hardening device.
FIG. 2 is a perspective view of a main portion of the traverse hardening device of the embodiment.
FIG. 3 is a plan sectional view taken along line III-III in FIG. 1.
FIG. 4 is a perspective view illustrating a state in which a secondary second coil member of the first embodiment of the present invention is disposed in a small-diameter portion of a shaft-shaped body.
FIG. 5 is a flowchart illustrating a traverse hardening method according to the first embodiment of the present invention.
FIG. 6 is a perspective view illustrating a first separation step in the traverse hardening method according to the first embodiment of the present invention.
FIG. 7 is a perspective view illustrating the first separation step in the traverse hardening method according to the first embodiment of the present invention.
FIG. 8 is a cross-sectional side view of a main portion illustrating a central heating step in the traverse hardening method according to the first embodiment of the present invention.
FIG. 9 is a perspective view illustrating a second disposition step in the traverse hardening method according to the first embodiment of the present invention.
FIG. 10 is a perspective view illustrating the second disposition step in the traverse hardening method according to the first embodiment of the present invention.
FIG. 11 is a cutaway view illustrating a main portion of a traverse hardening device according to a second embodiment of the present invention and is a side view schematically illustrating the main portion of the traverse hardening device.
FIG. 12 is a plan sectional view taken along line XII-XII in FIG. 11.
FIG. 13 is a side view for explaining an analytical model used for simulation of the traverse hardening device according to the embodiment of the present invention.
FIG. 14 is a diagram illustrating a simulation result by a traverse hardening device of Example 1.
FIG. 15 is a diagram illustrating a simulation result by a traverse hardening device according to Example 2.
FIG. 16 is a diagram illustrating a simulation result by a traverse hardening device of Comparative Example.

### [Embodiments of the Invention]

### (First Embodiment)

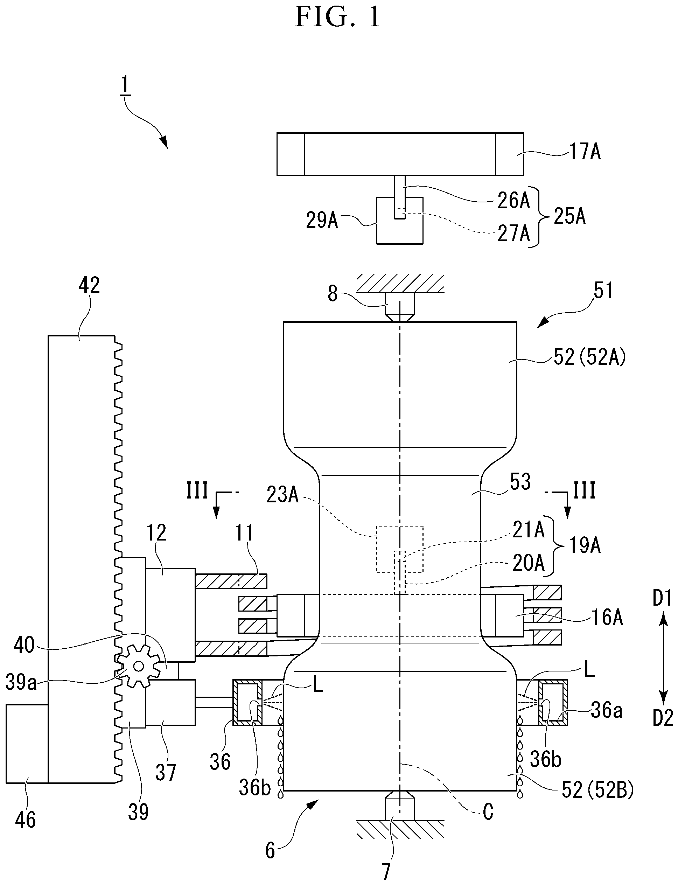

Hereinafter, a first embodiment of a traverse hardening device according to the present invention will be described with reference to FIGS. 1 to 10.

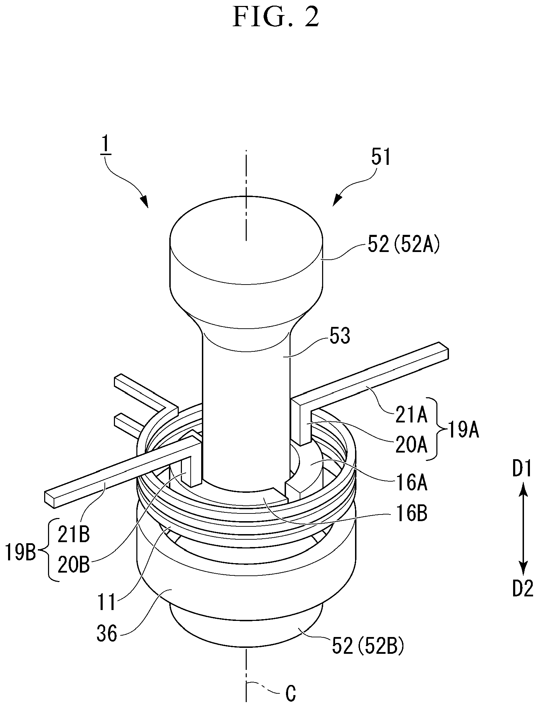

As illustrated in FIGS. 1 and 2, a traverse hardening device 1 of the present embodiment is a device for performing traverse hardening on a shaft-shaped body 51 such as an axle for a railway vehicle using a high frequency current.

First, the shaft-shaped body 51 will be described. The shaft-shaped body 51 includes a main body portion 52 and a small-diameter portion 53 provided in a middle portion of the main body portion 52 in an axis C direction. Each of the main body portion 52 and the small-diameter portion 53 is formed in a columnar shape, and an axis of the small-diameter portion 53 coincides with an axis C of the main body portion 52. In the present embodiment, the middle portion of the main body portion 52 is included in a range excluding each end portion of the shaft-shaped body 51 and the vicinity thereof in the direction along the axis C.

Hereinafter, a portion of the main body portion 52, which is disposed on one side D1 with respect to the small-diameter portion 53 in the direction along the axis C, is referred to as a first main body portion 52A. A portion of the main body portion 52, which is disposed on the other side D2 with respect to the small-diameter portion 53 in the direction along the axis C, is referred to as a second main body portion 52B.

The first main body portion 52A, the small-diameter portion 53, and the second main body portion 52B are each formed in a columnar shape and share the axis C as a common central axis. When viewed in a cross section perpendicular to the axis C of the main body portion 52, an outer diameter of the small-diameter portion 53 is smaller than an outer diameter of each of the main body portions 52A and 52B.

The shaft-shaped body 51 is made of a conductive material such as carbon steel or a low-alloy steel containing 95 weight% or more of iron (Fe) which is a ferrite.

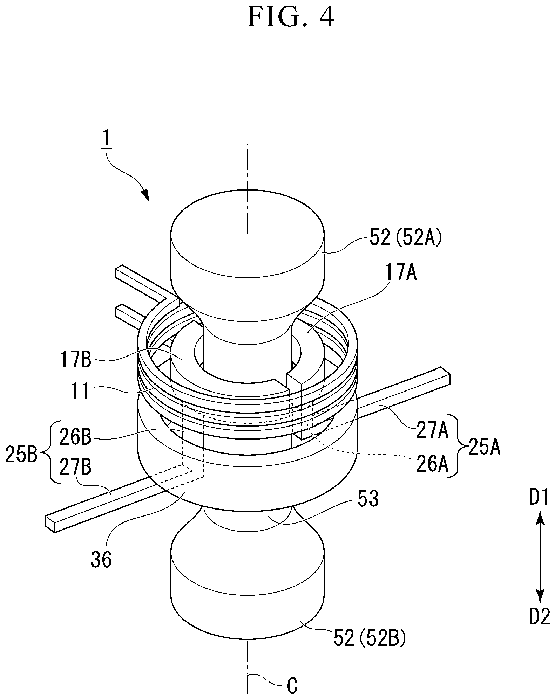

The traverse hardening device 1 includes a support member 6, a primary coil member 11, a plurality of secondary first coil members (secondary coil members) 16A and 16B, a plurality of secondary second coil members (secondary coil members) 17A and 17B (refer to FIG. 4 for the secondary second coil members 17A and 17B), a cooling ring (cooling unit) 36, and a controller 46.

As illustrated in FIG. 1, the support member 6 includes a lower center 7 and an upper center 8. The lower center 7 supports the second main body portion 52B of the shaft-shaped body 51 from below the second main body portion 52B. The upper center 8 supports the first main body portion 52A of the shaft-shaped body 51 from above the first main body portion 52A. The centers 7 and 8 support the shaft-shaped body 51 such that one side D1 in the axis C direction is upward and the other side D2 is downward. The shaft-shaped body 51 is rotatable in a circumferential direction of the shaft-shaped body 51 about the axis C in a state supported by the lower center 7 and the upper center 8. The shaft-shaped body 51 can be rotated by a drive device (not illustrated) through the lower center 7 and the upper center 8 at the time of the traverse hardening.

The primary coil member 11 is formed in an annular shape by spirally winding a coil wire material. An inner diameter of the primary coil member 11 is larger than the outer diameters of the main body portions 52A and 52B. The shaft-shaped body 51 is inserted inside the primary coil member 11.

Each end portion of the primary coil member 11 is electrically and mechanically connected to a current transformer 12. The current transformer 12 causes a high frequency current to flow through the primary coil member 11.

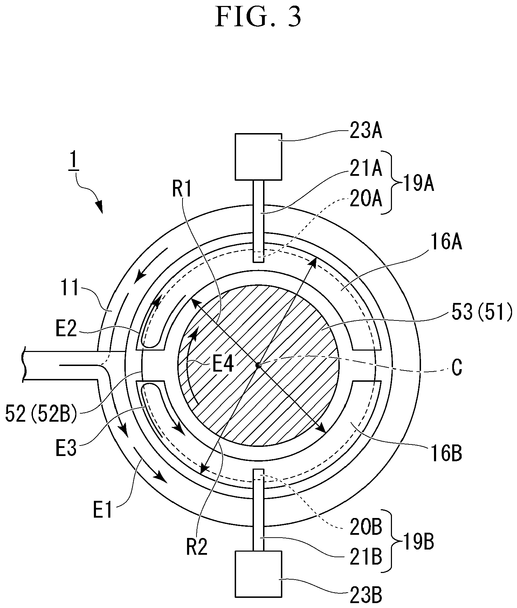

As illustrated in FIGS. 2 and 3, in the present embodiment, two secondary first coil members 16A and 16B are provided as the plurality of secondary first coil members 16A and 16B. However, the number of the secondary first coil members included in the traverse hardening device 1 is not limited as long as the plurality of secondary first coil members are provided, and may be three or more.

Each of the secondary first coil member 16A and 16B is formed in a C shape in a plan view when viewed from a direction along the axis C of the main body portion 52 of the shaft-shaped body 51. The secondary first coil members 16A and 16B are disposed side by side to be separated from each other in the circumferential direction (hereinafter, simply referred to as the circumferential direction) of the shaft-shaped body 51. This circumferential direction coincides with a circumferential direction of the primary coil member 11 or the like. In this example, as illustrated in FIG. 1, in the direction along the axis C, a length of each of the secondary first coil members 16A and 16B is shorter than a length of the small-diameter portion 53 of the shaft-shaped body 51.

As illustrated in FIG. 3, a diameter R1 of an inscribed circle which is in contact with each outer surface (inner surface of each of the secondary first coil members 16A and 16B) of the secondary first coil members 16A and 16B facing the axis C is larger than the outer diameter of the small-diameter portion 53 of the shaft-shaped body 51. It is desirable that the diameter R1 is smaller than the outer diameters of the main body portions 52A and 52B. A diameter R2 of a circumscribed circle which is in contact with each outer surface (outer surface of each of the secondary first coil members 16A and 16B) of the secondary first coil members 16A and 16B located on an opposite side of the axis C is smaller than the inner diameter of the primary coil member 11.

The secondary first coil members 16A and 16B can be disposed in a state of being separated from each of the small-diameter portion 53 and the primary coil member 11 inside the primary coil member 11 on the radially outer side of the small-diameter portion 53. The radial direction corresponds to a radial direction of the primary coil member 11 or the like.

As illustrated in FIG. 2 and FIG. 3, first support portions 19A and 19B are connected to the secondary first coil members 16A and 16B.

The first support portion 19A includes a first support piece 20A which extends upward from the secondary first coil member 16A and a first connection piece 21A which extends radially outward from the first support piece 20A. The first support piece 20A is disposed at a center portion or an end portion of the secondary first coil member 16A in the circumferential direction. Desirably, the first support piece 20A is attached at a position which is located on a radially outer end portion of the secondary first coil member 16A and is located radially outside the main body portions 52A and 52B so that the first support piece 20A and the main body portions 52A and 52B do not interfere with each other. The first connection piece 21A extends radially outward from an end portion of the first support piece 20A opposite to the end portion of the first support piece 20A to which the secondary first coil member 16A is connected.

Similar to the first support portion 19A, the first support portion 19B includes a first support piece 20B and a first connection piece 21B. The first connection pieces 21A and 21B may be disposed on the same straight line. For example, each of the first support portions 19A and 19B is formed by bending an electrically insulating rod-shaped member into an L shape.

As illustrated in FIG. 3, first moving portions 23A and 23B are connected to the first connection pieces 21A and 21B, respectively. For example, the first moving portions 23A and 23B include a three-axis stage (not illustrated) and a drive motor (not illustrated), and can move the secondary first coil members 16A and 16B in an up-down direction and a direction along a horizontal plane via the first support portions 19A and 19B.

As illustrated in FIGS. 1 and 4, the secondary second coil members 17A and 17B are configured similarly to the secondary first coil members 16A and 16B. The primary coil member 11, the secondary first coil members 16A and 16B, and the secondary second coil members 17A and 17B are each made of a conductive material such as copper. Each of cross-sectional shapes of the primary coil member 11, the secondary first coil members 16A and 16B, and the secondary second coil members 17A and 17B in the plane perpendicular to the circumferential direction may have any shape.

Second support portions 25A and 25B are connected to the secondary second coil members 17A and 17B.

The second support portion 25A includes a second support piece 26A which extends downward from the secondary second coil member 17A and a second connection piece 27A which extends radially outward from the second support piece 26A. The second support piece 26A is disposed at a center portion or an end portion of the secondary second coil member 17A in the circumferential direction. Desirably, the second support piece 26A is attached at a position which is located on a radially outer end portion of the secondary second coil member 17A and is located radially outside the main body portions 52A and 52B so that the second support piece 26A and the main body portions 52A and 52B do not interfere with each other. The second connection piece 27A extends radially outward from an end portion of the second support piece 26A opposite to the end portion of the second support piece 26A to which the secondary second coil member 17A is connected.

Similar to the second support portion 25A, the second support portion 25B includes a second support piece 26B and a second connection piece 27B. The second connection pieces 27A and 27B may be disposed on the same straight line. In this example, the first connection pieces 21A and 21B and the second connection pieces 27A and 27B are disposed on the same plane.

As illustrated in FIG. 1, second moving portions 29A and 29B (second moving portion 29B is not illustrated) configured similarly to the first moving portions 23A and 23B are respectively connected to the second connection pieces 27A and 27B. The second moving portions 29A and 29B can move the secondary second coil members 17A and 17B in the up-down direction and the direction along the horizontal plane via the second support portions 25A and 25B.

As illustrated in FIGS. 1 and 2, the cooling ring 36 is formed in an annular shape. An internal space 36a is formed in the cooling ring 36. A plurality of nozzles 36b communicating with the internal space 36a are formed on an inner circumferential surface of the cooling ring 36 so as to be separated from each other in the circumferential direction. The shaft-shaped body 51 is inserted into the cooling ring 36. The cooling ring 36 is disposed below the primary coil member 11.

A pump 37 is connected to the cooling ring 36. The pump 37 supplies a cooling liquid L such as water into the internal space 36 a of the cooling ring 36. The cooling liquid L supplied to the internal space 36a is ejected toward the shaft-shaped body 51 through the plurality of nozzles 36b, and the shaft-shaped body 51 is cooled by the cooling liquid L.

As illustrated in FIG. 1, the primary coil member 11, the current transformer 12, the cooling ring 36, and the pump 37 are fixed to a support plate 39. A pinion gear 39a is formed on the support plate 39. A motor 40 for drivingly rotating the pinion gear 39a is attached to the support plate 39.

The pinion gear 39a of the support plate 39 meshes with a rack 42. The support plate 39 is connected to the rack 42 via a guide rail (not illustrated). The support plate 39 is movable upward or downward relative to the rack 42 by this guide rail. When the motor 40 is driven, the pinion gear 39a rotates and the support plate 39 moves upward or downward with respect to the rack 42. The rack 42 may be a ball screw. In this case, a plurality of pinion gears 39a may be disposed so that the ball screw is interposed therebetween.

Although not illustrated, the controller 46 includes at least an arithmetic circuit and a memory. A control program or the like processed by this arithmetic circuit is stored in this memory.

The controller 46 is connected to the current transformer 12, the first moving portions 23A and 23B, the second moving portions 29A and 29B, the pump 37, and the motor 40 so as to control these.

Next, a traverse hardening method of the present embodiment will be described.

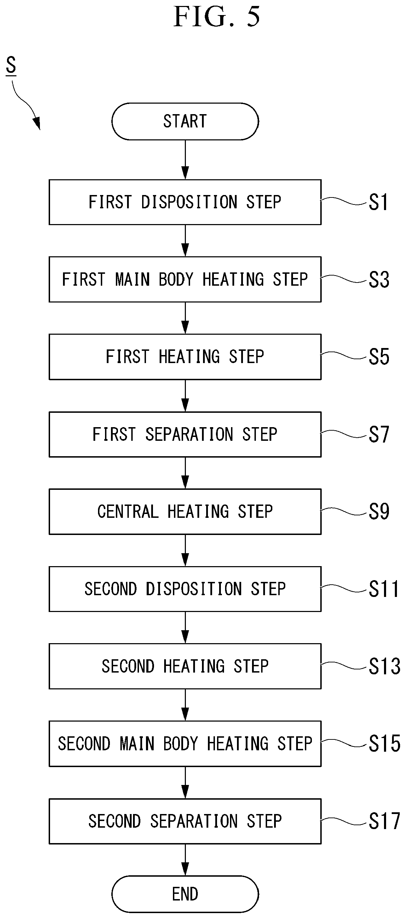

FIG. 5 is a flowchart illustrating a traverse hardening method S according to the first embodiment of the present invention.

First, in a first disposition step (disposition step, Step S1 illustrated in FIG. 5), as illustrated in FIGS. 1 and 2, the controller 46 drives the first moving portions 23A and 23B so that the secondary first coil members 16A and 16B are disposed at a lower end portion of the small-diameter portion 53 of the shaft-shaped body 51. In this case, the secondary first coil members 16A and 16B are disposed radially outside the small-diameter portion 53 so as to be separated from each other in the circumferential direction. Moreover, the secondary first coil members 16A and 16B are disposed so that the diameter R1 of the inscribed circle of the secondary first coil members 16A and 16B is larger than the outer diameter of the small-diameter portion 53 of the shaft-shaped body 51. In this case, it is desirable that the secondary first coil members 16A and 16B are disposed so that the diameter R1 is smaller than the outer diameters of the main body portions 52A and 52B. The secondary first coil member 16A and 16B are separated radially outward from the small-diameter portion 53 and are not in contact with the small-diameter portion 53.

When the first disposition step S1 ends, the step proceeds to Step S3.

Next, in a first main body heating step (Step S3), the controller 46 performs traverse hardening on the second main body portion 52B of the shaft-shaped body 51.

Specifically, the current transformer 12 is driven so that a high frequency current flows through the primary coil member 11. Further, the pump 37 is driven to eject the cooling liquid L from the plurality of nozzles 36b of the cooling ring 36. The motor 40 is driven to move the support plate 39 upward with respect to the rack 42. The primary coil member 11 and the cooling ring 36 are sequentially inserted externally into the shaft-shaped body 51, and thus, the primary coil member 11 and the cooling ring 36 are moved upward. The upper side is a movement direction of the primary coil member 11 with respect to the shaft-shaped body 51.

The second main body portion 52B is heated by the primary coil member 11 and rapidly cooled by the cooling ring 36 from the lower end portion of the second main body portion 52B toward the upper side (small-diameter portion 53). When a high frequency current flows through the primary coil member 11, an induction current is generated in the second main body portion 52B by electromagnetic induction of the primary coil member 11, and Joule heat is generated in the second main body portion 52B by the electric resistance of the second main body portion 52B. The second main body portion 52B is heated by the induction heating and a phase thereof becomes austenite. The second main body portion 52B heated by the induction heating is cooled by the cooling ring 36 which moves upward after the primary coil member 11, and thus, the phase of the second main body 52B becomes martensite. In this way, the traverse hardening is performed on the second main body portion 52B.

In addition, in the first main body heating step S3, and a first heating step S5, a first separation step S7, a central heating step S9, a second disposition step S11, a second heating step S13, and a second main body heating step S15 which will be described later, the traverse hardening is performed while the upward movements of the primary coil member 11 and the cooling ring 36 with respect to the shaft-shaped body 51 are not stopped. However, upward movement speeds of the primary coil member 11 and the cooling ring 36 with respect to the shaft-shaped body 51 may be changed in each step or for each step.

When the first main body heating step S3 ends, the step proceeds to Step S5.

Next, in the first heating step (heating step, Step S5), when at least a portion of each of the secondary first coil members 16A and 16B is disposed in the primary coil member 11, the lower end portion of the small-diameter portion 53 is heated. In this case, the secondary first coil members 16A and 16B are radially separated from the primary coil member 11 and are not in contact with the primary coil member 11 and the small-diameter portion 53.

A high frequency current flows through the primary coil member 11, an induction current is generated at the lower end portion of the small-diameter portion 53 via the secondary first coil members 16A and 16B by the electromagnetic induction of the primary coil member 11, and thus, the lower end portion of the small-diameter portion 53 is heated by induction heating. Specifically, as illustrated in FIG. 3, when a current flows through the primary coil member 11 in a direction E1, eddy currents flow through outer surfaces of the secondary first coil members 16A and 16B in the directions E2 and E3 by the electromagnetic induction, and an eddy current flows through an outer surface of the small-diameter portion 53 in a direction E4. Then, similarly to the above-described first main body heating step S3, the lower end portion of the small-diameter portion 53 is heated by the induction heating, and thus, a phase thereof becomes austenite. The lower end portion of the small-diameter portion 53 heated by the induction heating is cooled by the cooling ring 36 which moves upward after the primary coil member 11, and thus, the phase of the lower end portion of the small-diameter portion 53 becomes martensite. In this way, the traverse hardening is performed on the lower end portion of the small-diameter portion 53.

In addition, the first disposition step S1 may be performed after the first main body heating step S3 and before the first heating step S5.

When the first heating step S5 ends, the step proceeds to Step S7.

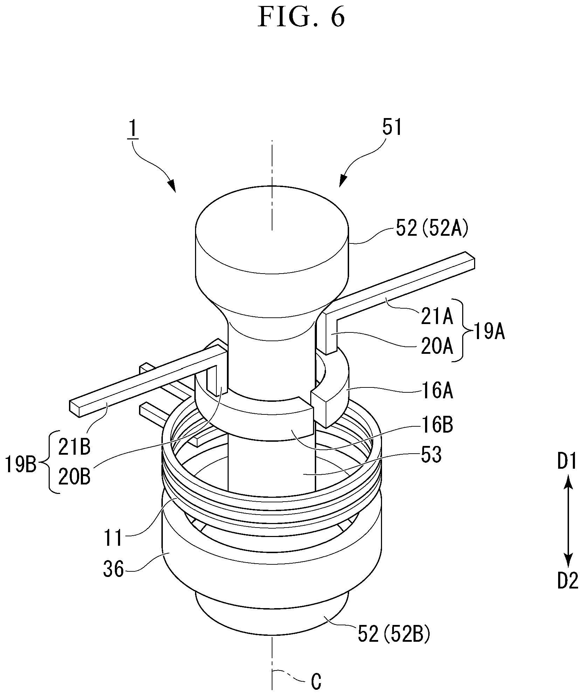

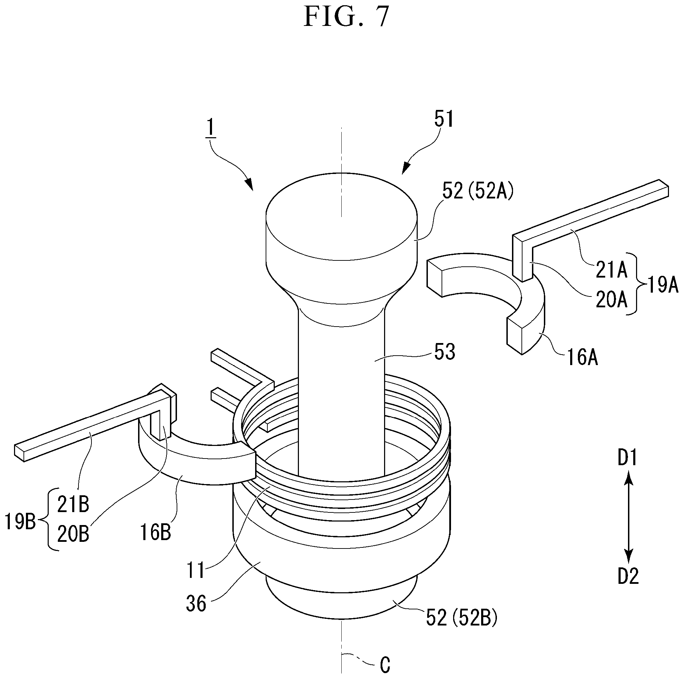

Next, in the first separation step (separation step, Step S7), the controller 46 drives the first moving portions 23A and 23B, and as illustrated in FIG. 6, moves the secondary first coil members 16A and 16B upward with respect to the primary coil member 11 using the first support portions 19A and 19B. Then, as illustrated in FIG. 7, the secondary first coil members 16A and 16B are separated radially outward from the small-diameter portion 53. The first separation step S7 is performed after the first heating step S5.

When the first separation step S7 ends, the step proceeds to Step S9.

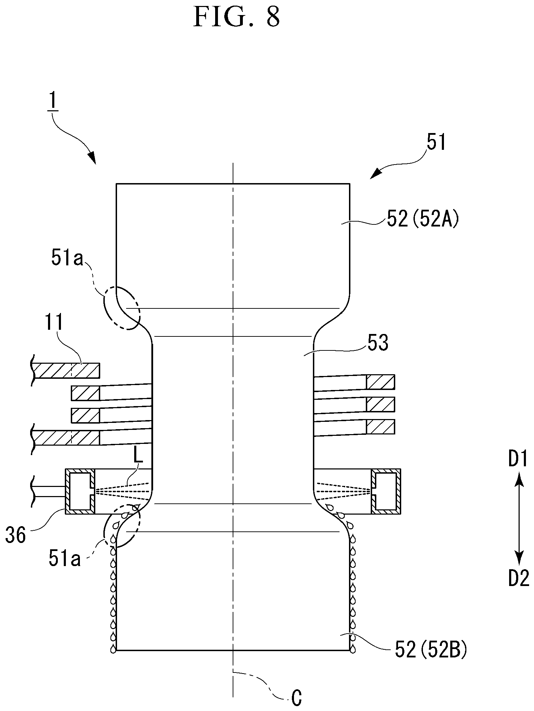

Next, in the central heating step (Step S9), as illustrated in FIG. 8, the center portion of the small-diameter portion 53 in the direction along the axis C is heated. In this case, since the secondary first coil members 16A and 16B are not disposed between the primary coil member 11 and the small-diameter portion 53, a current value of the high frequency current flowing through the primary coil member 11 is increased. When the primary coil member 11 is located at a connection portion 51a (particularly, a portion protruding outward of the shaft-shaped body 51) in the shaft-shaped body 51 between the main body portions 52A and 52B and the small-diameter portion 53, the primary coil member 11 is further separated from the shaft-shaped body 51 than when the primary coil member 11 is disposed at a position at which the primary coil member 11 heats the lower end portion of the small-diameter portion 53. Accordingly, even if a current value increases, a temperature of the connection portion 51a can be prevented from being too high.

When the heating of the center portion of the small-diameter portion 53 in the direction along the axis C ends, the current value of the high frequency current flowing through the primary coil member 11 is reduced and returned to an original value.

When the central heating step S9 ends, the step proceeds to Step S11.

Instead of the first separation step S7 and the central heating step S9, the center portion of the small-diameter portion 53 in the direction along the axis C may be heated using the secondary first coil members 16A and 16B. Then, after the heating step of the center portion, the first separation step of separating the secondary first coil members 16A and 16B radially outward from the small-diameter portion 53 may be performed.

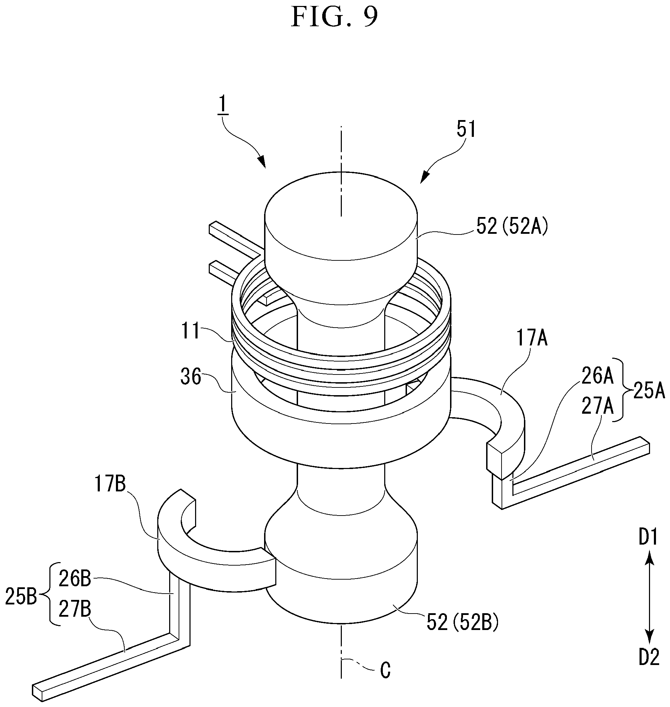

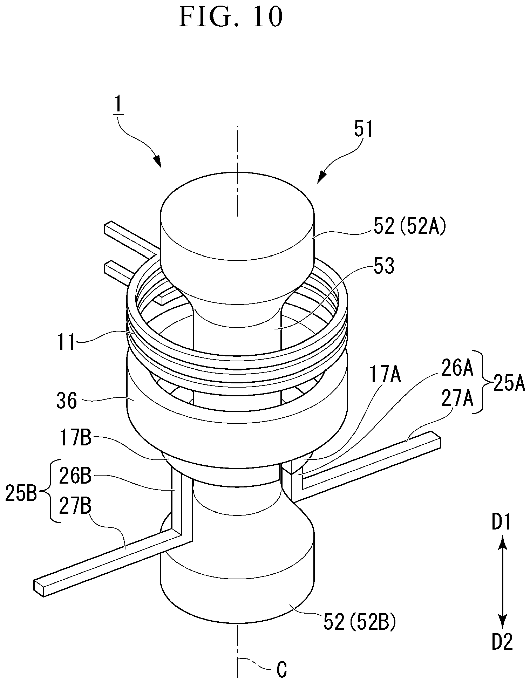

Next, in the second disposition step (disposition step, Step S11), the controller 46 drives the second moving portions 29A and 29B so that the secondary second coil members 17A and 17B approach the lower end portion of the small-diameter portion 53 from below the primary coil member 11 and the cooling ring 36, as illustrated in FIG. 9. Then, as illustrated in FIG. 10, the secondary second coil members 17A and 17B are moved upward, and as illustrated in FIG. 4, the secondary second coil members 17A and 17B are disposed at the upper end portion of the small-diameter portion 53 through the primary coil member 11. The secondary second coil members 17A and 17B are separated radially outward from the small-diameter portion 53 and are not in contact with the small-diameter portion 53.

When the second disposition step S11 ends, the step proceeds to Step S13.

Next, in the second heating step (heating step, Step S13), as illustrated in FIG. 4, when at least a portion of each of the secondary second coil members 17A and 17B is disposed in the primary coil member 11 which moves upward with respect to the shaft-shaped body 51, the controller 46 heats the upper end portion of the small-diameter portion 53. In this case, the secondary second coil members 17A and 17B are radially separated from the primary coil member 11. A heating mode or phase transformation in the second heating step is the same as that in the first heating step.

When the second heating step S13 ends, the step proceeds to Step S15.

Next, in the second main body heating step (Step S15), when the first main body portion 52A of the shaft-shaped body 51 is disposed in the primary coil member 11, the controller 46 performs the traverse hardening on the first main body portion 52A. A heating mode or phase transformation in the second main body heating step is the same as that in the first main body heating step. When the second main body heating step S15 ends, the step proceeds to Step S17.

Next, in the second separation step (Step S17), the controller 46 drives the second moving portions 29A and 29B so that the secondary second coil member 17A and 17B are separated radially outward from the small-diameter portion 53. The second separation step S17 may be performed before the second main body heating step S15.

After the small-diameter portion 53 and the first main body portion 52A are heated in the first heating step S5, the central heating step S9, the second heating step S13, and the second main body heating step S15, the small-diameter portion 53 and the first main body portion 52A are cooled by the cooling ring 36.

When the second separation step S17 ends, all the steps of the traverse hardening method S end, and the traverse hardening is performed on the entire shaft-shaped body 51. A hardness of the shaft-shaped body 51 subj ected to the traverse hardening is improved.

In the traverse hardening method S, the traverse hardening is performed on the shaft-shaped body 51 while the coil members 16A, 16B, 17A, and 17B are disposed radially outside the small-diameter portion 53 or the coil members 16A, 16B, 17A, and 17B are separated from the small-diameter portion 53.

As described above, according to the traverse hardening device 1 and the traverse hardening method S of the present embodiment, the plurality of secondary first coil members 16A and 16B separated from each other in advance are disposed radially outside the small-diameter portion 53 of the shaft-shaped body 51 so as to be separated from each other in the circumferential direction.

A high frequency current flows through the primary coil member 11 which moves upward with respect to the shaft-shaped body 51. Then, with respect to the main body portions 52A and 52B of the shaft-shaped body 51, the induction current is generated in the main body portions 52A and 52B by the electromagnetic induction of the primary coil member 11, and Joule heat is generated in the main body portions 52A and 52B by the electric resistance of the main body portions 52A and 52B. The main body portions 52A and 52B heated by the Joule heat are cooled by the cooling ring 36 which moves upward after the primary coil member 11, and thus, the traverse hardening is performed on the main body portions 52A and 52B.

Meanwhile, with respect to the small-diameter portion 53 of the shaft-shaped body 51, the induction current is generated in the small-diameter portion 53 of the shaft-shaped body 51 through the secondary first coil members 16A and 16B disposed radially outside the small-diameter portion 53 by the electromagnetic induction, and thus, Joule heat is generated in the small-diameter portion 53 by the electric resistance of the small-diameter portion 53. Similarly, the small-diameter portion 53 heated by Joule heat is cooled, and the traverse hardening is performed on the small-diameter portion 53. After the traverse hardening on the small-diameter portion 53 ends, the secondary first coil members 16A and 16B is removed radially outward from the small-diameter portion 53.

In this case, if the secondary first coil members 16A and 16B are moved radially outward from the small-diameter portion 53, the secondary first coil members 16A and 16B are removed from the small-diameter portion 53. Accordingly, the secondary first coil members 16A and 16B can be easily removed from the shaft-shaped body 51.

For example, even in a case where the diameter R1 of the inscribed circle of the secondary first coil members 16A and 16B is slightly larger than the diameters of the main body portions 52A and 52B of the shaft-shaped body 51, the secondary first coil members 16A and 16B can be prevented from interfering with the main body portions 52A and 52B.

Moreover, the diameter R1 of the inscribed circle which is in contact with each outer surface of the secondary first coil members 16A and 16B facing the axis C is smaller than the outer diameters of the main body portions 52A and 52B. As a result, the secondary first coil members 16A and 16B can be brought closer to the small-diameter portion 53, and thus, the small-diameter portion 53 can be more efficiently heated by the secondary first coil members 16A and 16B.

In addition, the present embodiment includes the secondary first coil members 16A and 16B and the secondary second coil members 17A and 17B. After the lower end portion of the small-diameter portion 53 of the shaft-shaped body 51 is heated by the primary coil member 11 and the secondary first coil members 16A and 16B, the secondary first coil members 16A and 16B are moved upward with respect to the primary coil member 11 using the first support pieces 20A and 20B. Accordingly, the first support pieces 20A and 20B are prevented from interfering with the second main body portion 52B disposed below the primary coil member 11 and the small-diameter portion 53, the secondary first coil members 16A and 16B are taken out from the inside of the primary coil member 11, and the secondary first coil members 16A and 16B can be separated radially outward from the small-diameter portion 53.

Then, after the upper end portion of the small-diameter portion 53 is heated by the primary coil member 11 and the secondary second coil members 17A and 17B, the secondary second coil members 17A and 17B are moved upward with respect to the primary coil member 11 using the second support pieces 26A and 26B. Accordingly, the second support pieces 26A and 26B are prevented from interfering with the first main body portion 52A disposed above the primary coil member 11 and the small-diameter portion 53, the secondary second coil members 17A and 17B are taken out from the inside of the primary coil member 11, and the plurality of secondary second coil members 17A and 17B can be separated radially outward from the small-diameter portion 53.

In the secondary second coil member 17A and the second support portion 25A, with respect to the secondary first coil member 16A and the first support portion 19A, the first support portion 19A may be removed and the second support portion 25A may be attached. Moreover, the secondary first coil member 16A and the first support portion 19A may be rotated 180° around the axis along the horizontal plane.

The first support portion 19A may not include the first connection piece 21A. The second support portion 25A may not include the second connection piece 27A. The same applies to the first support portion 19B and the second support portion 25B.

When the length of each of the secondary first coil members 16A and 16B in the direction along the axis C is substantially the same as the length of the small-diameter portion 53 of the shaft-shaped body 51 in the direction of the axis C, the traverse hardening device 1 may not include the secondary second coil members 17A and 17B, the second support portions 25A and 25B, and the second moving portions 29A and 29B. In this case, in the traverse hardening method S, the central heating step S9, the second disposition step S11, the second heating step S13, and the second separation step S17 are not performed.

During the traverse hardening, the shaft-shaped body 51 is rotated about the axis C in the circumferential direction, and thus, it is possible to uniformly heat and cool the shaft-shaped body 51.

### (Second Embodiment)

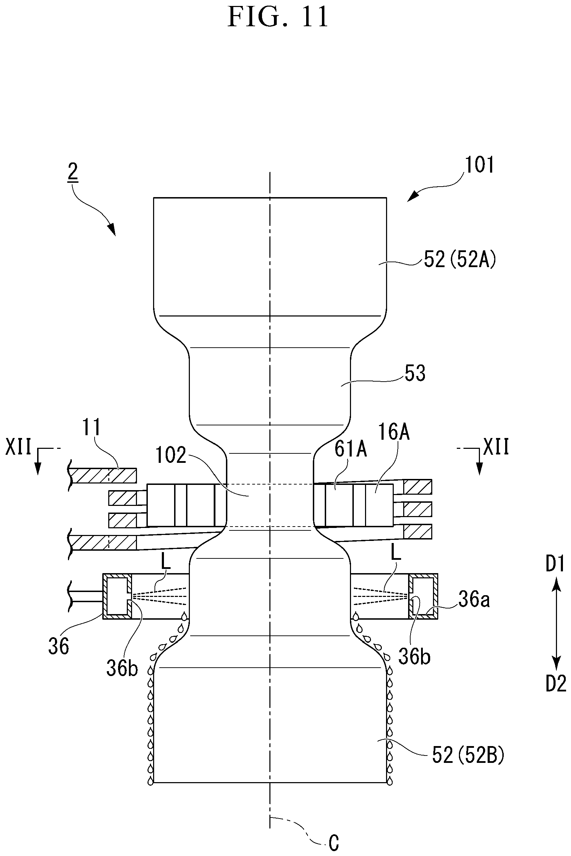

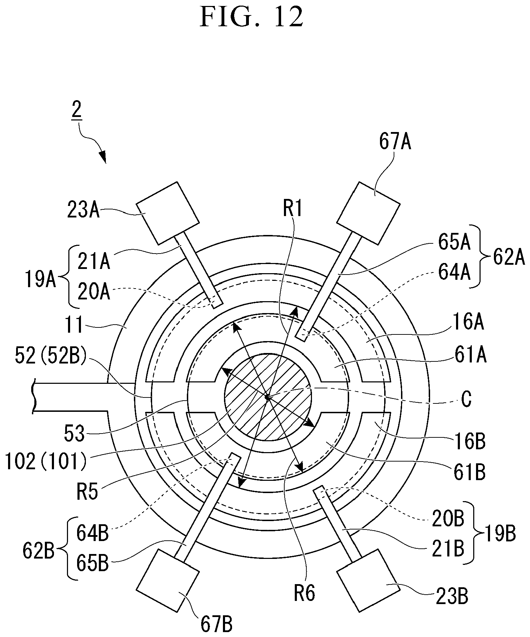

Next, a second embodiment of the present invention will be described with reference to FIGS. 11 and 12. However, the same portions as those of the above-described embodiment are designated by the same reference symbols, the description thereof will be omitted, and only different points will be described.

As illustrated in FIG. 11, a shaft-shaped body 101 which is subjected to traverse hardening by a traverse hardening device 2 of the present embodiment includes a second small-diameter portion 102 in a middle portion or a bottom portion of the end portion of the small-diameter portion 53 in the direction along the axis C in addition to respective configurations of the shaft-shaped body 51 of the first embodiment. An outer diameter of the second small-diameter portion 102 is smaller than the outer diameter of the small-diameter portion 53. The second small-diameter portion 102 is formed in a columnar shape, and is disposed coaxially with the main body portion 52 and the small-diameter portion 53.

As illustrated in FIGS. 11 and 12, in addition to respective configurations of the traverse hardening device 1 of the first embodiment, the traverse hardening device 2 includes a plurality of tertiary coil members 61A and 61B and third support portions 62A and 62B.

The tertiary coil members 61A and 61B are disposed so as to be separated from each other in a circumferential direction. A diameter R5 of an inscribed circle which is in contact with each outer surface of the tertiary coil members 61A and 61B facing the axis C is larger than a diameter of the second small-diameter portion 102 of the shaft-shaped body 101. It is desirable that the diameter R5 is smaller than the outer diameter of the small-diameter portion 53. A diameter R6 of a circumscribed circle which is contact with each outer surface of the tertiary coil members 61A and 61B on a side opposite to the axis C is smaller than the diameter R1 of the inscribed circle of the secondary first coil member 16A and 16B.

The tertiary coil members 61A and 61B can be disposed in a state of being separated from each of the second small-diameter portion 102 and the secondary first coil members 16A and 16B radially inside the secondary first coil members 16A and 16B on the radially outer side of the second small-diameter portion 102 of the shaft-shaped body 101.

Preferably, portions of the tertiary coil members 61A and 61B which are separated from each other in the circumferential direction and portions of the secondary first coil members 16A and 16B which are separated from each other in the circumferential direction are disposed at the same positions in the circumferential direction. That is, the portions of the tertiary coil members 61A and 61B which are separated from each other in the circumferential direction and the portions of the secondary first coil members 16A and 16B which are separated from each other in the circumferential direction are preferably formed at positions at which at least some of the portions overlap each other in the circumferential direction, and more preferably, are formed at positions at which the portions completely coincide with each other in the circumferential direction. According to this configuration, a loss in electromagnetic induction can be reduced.

The third support portion 62A includes a third support piece 64A which extends upward from the tertiary coil member 61A and a third connection piece 65A which extends radially outward from the third support piece 64A. The third connection piece 65A extends radially outward from an end portion of the third support piece 64A opposite to an end portion of the third support piece 64A to which the tertiary coil member 61A is connected.

Similar to the third support portion 62A, the third support portion 62B includes a third support piece 64B and a third connection piece 65B.

Each of the third connection pieces 65A and 65B is disposed at a position different in the circumferential direction from each of the first connection pieces 21A and 21B of the first support portions 19A and 19B.

Third moving portions 67A and 67B configured similarly to the first moving portions 23A and 23B are connected to the third connection pieces 65A and 65B, respectively.

In the traverse hardening device 2 of the present embodiment configured as described above, similarly to the traverse hardening device 1 of the first embodiment, the traverse hardening is performed on the shaft-shaped body 101 while the coil members 16A, 16B, 17A, and 17B are respectively disposed radially outside the small-diameter portion 53, the tertiary coil members 61A and 61B are respectively disposed radially outside the second small-diameter portion 102, the coil members 16A, 16B, 17A, and 17B are respectively separated from the small-diameter portion 53, or the tertiary coil members 61A and 61B are respectively separated from the second small-diameter portion 102.

According to the traverse hardening device 2 of the present embodiment, the secondary first coil members 16A and 16B can be easily removed from the shaft-shaped body 101.

Moreover, when the tertiary coil members 61A and 61B are disposed radially outside the second small-diameter portion 102 of the shaft-shaped body 101, and the secondary first coil members 16A and 16B are further disposed radially outside the tertiary coil members 61A and 61B, the first connection pieces 21A and 21B and the third connection pieces 65A and 65B can be prevented from interfering from each other.

When the shaft-shaped body includes a third small-diameter portion on a bottom portion of the second small-diameter portion 102, the traverse hardening device may include a plurality of quartic coil members. Furthermore, when the shaft-shaped body includes a fourth small-diameter portion on a bottom portion of the third small-diameter portion, the traverse hardening device may include a plurality of quin-tic coil members.

As described above, the number of the plurality of secondary coil members, the plurality of tertiary coil members, ..., a plurality of Nth-order coil members disposed in the primary coil member 11 included in the traverse hardening device is not particularly limited.

Hereinbefore, the first embodiment and the second embodiment of the present invention are described in detail with reference to the drawings. However, specific configurations are not limited to the embodiments, and include a modification, a combination, a deletion, or the like of the configurations within a scope which does not depart from the gist of the present invention. Moreover, it goes without saying that the configurations illustrated in each embodiment can be appropriately combined and used.

For example, in the first embodiment and the second embodiment, the axis C of each of the shaft-shaped bodies 51 and 101 is disposed along the up-down direction. However, the axis C may be disposed to be inclined to the up-down direction. In this case, the primary coil member 11 and the cooling ring 36 move while being inclined with respect to the up-down direction. Further, the axis C of each of the shaft-shaped bodies 51 and 101 may be disposed in a horizontal direction.

The traverse hardening device 1 may not include the support member 6 and the controller 46.

In the first embodiment and the second embodiment, each of the shaft-shaped bodies 51 and 101 is the axles for a railway vehicle, but may be a shaft of a ball screw or the like. Further, in the first embodiment, the aspect is described in which the primary coil member 11, the cooling ring 36, or the like is moved with respect to the fixed shaft-shaped body 51 in the direction along the axis C of the main body portion 52 of the shaft-shaped body 51. However, the primary coil member 11, the cooling ring 36, or the like may be fixed, and the shaft-shaped body 51 may be moved in the direction along the axis C.

### (Analysis Result)

Hereinafter, results of simulating the traverse hardening device 1 of Example based on the first embodiment and a traverse hardening device of Comparative Example are described.

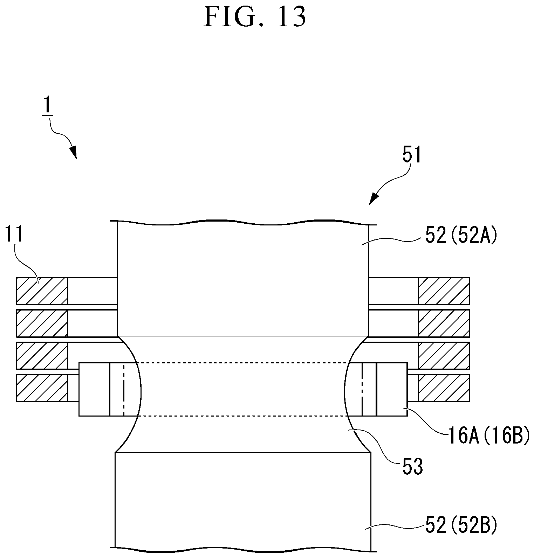

FIG. 13 illustrates an analytical model used for the simulation.

The shaft-shaped body 51 used for the simulation was formed such that the lengths of the secondary first coil member 16A and 16B in the up-down direction is not so shorter than the length of the small-diameter portion 53 of the shaft-shaped body 51 in the up-down direction, and a temperature of the shaft-shaped body 51 easily increased during the traverse hardening.

Moreover, in the analytical model of Example 1, the diameter of the inscribed circle of the secondary first coil member 16A and 16B is larger than the outer diameter of the main body portion 52.

The outer diameter of the main body portion 52B was 198 mm, and the outer diameter (minimum diameter) of the small-diameter portion 53 was 181 mm. The material of the shaft-shaped body 51 was carbon steel. The frequency of the high frequency current flowing through the primary coil member 11 was set to 1 kHz. The maximum value in the temperature of the shaft-shaped body 51 was determined when the shaft-shaped body 51 was heated by the traverse hardening to harden the shaft-shaped body 51 to a certain depth.

If the temperature of the shaft-shaped body 51 is too high (overheated) during the traverse hardening, there is a problem that a structure of the shaft-shaped body 51 is changed. Therefore, it is desirable to suppress the maximum value in the temperature of the shaft-shaped body 51 while securing the hardening of the shaft-shaped body 51 to a certain depth.

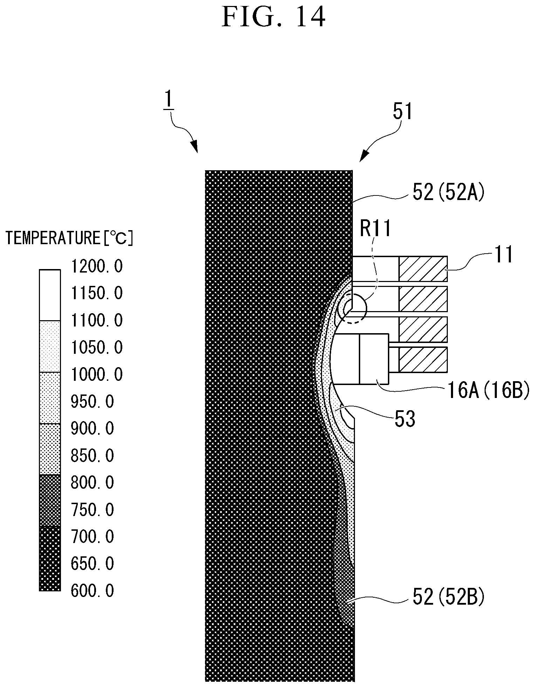

FIG. 14 illustrates a simulation result by the traverse hardening device 1 of Example 1. In FIG. 14 and FIGS. 15 and 16 described later, a temperature distribution of the shaft-shaped body 51 is represented by gray shades. The lighter gray regions illustrate temperatures higher than those of the darker gray regions.

When the traverse hardening device 1 of Example 1 performed the traverse hardening on the shaft-shaped body 51, it was found that the depth of 5.0 mm which could be heated to 800°C or higher in the small-diameter portion 53 was secured and, at a position of the primary coil member 11 illustrated in FIG. 14, a temperature of a region R11 indicated the maximum temperature of the shaft-shaped body 51. This maximum temperature is 1149°C.

In the traverse hardening device 1 of Example 2, the diameter of the inscribed circle which is in contact with each outer surface (each inner surface of each of the secondary first coil members 16A and 16B) of the secondary first coil members 16A and 16B is smaller than the outer diameter of the main body portion 52. In this respect, the traverse hardening device 1 of Example 2 is different from the traverse hardening device 1 of Example 1. The diameter of the inscribed circle of the secondary first coil members 16A and 16B is 6 mm smaller than the diameter of the main body portion 52.

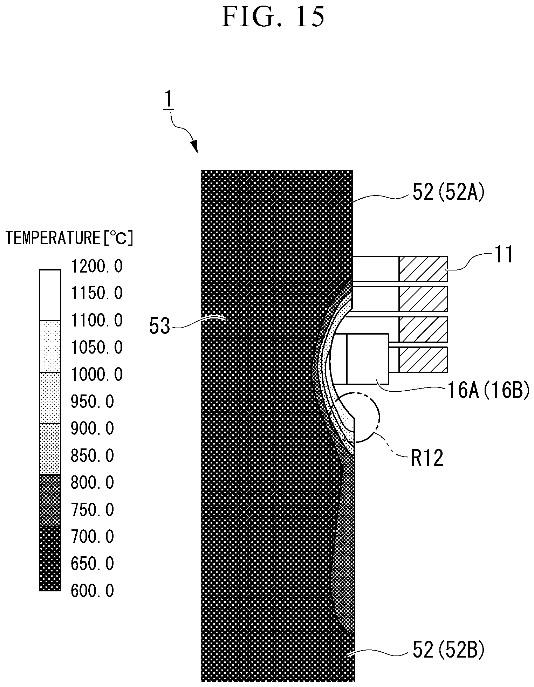

When the traverse hardening device 1 of Example 2 performed the traverse hardening on the shaft-shaped body 51, it was found that the depth of 4.8 mm which could be heated to 800°C or higher in the small-diameter portion 53 was secured and, at a position of the primary coil member 11 illustrated in FIG. 15, a temperature of a region R12 indicated the maximum temperature of the shaft-shaped body 51. This maximum temperature is 1072°C.

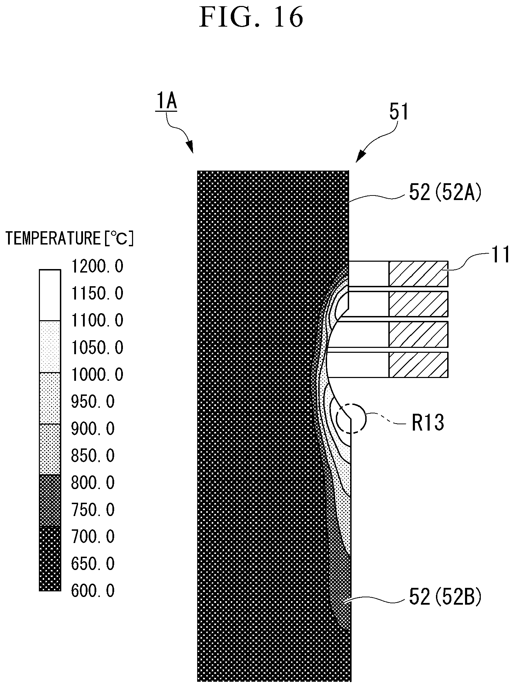

FIG. 16 illustrates a simulation result by a traverse hardening device 1A of Comparative Example. The traverse hardening device 1A of Comparative Example is different from the traverse hardening device 1 of Example in that the traverse hardening device 1A does not include the secondary first coil members 16A and 16B. When the traverse hardening device 1A of Comparative Example performed the traverse hardening on the shaft-shaped body 51, it was found that a temperature of a region R13 indicated the maximum temperature of the shaft-shaped body 51, although only a depth of 3.5 mm which could be heated to 800°C or higher in the small-diameter portion 53 could be secured. This maximum temperature is 1225°C.

Compared with the traverse hardening device 1A of Comparative Example, in the traverse hardening device 1 of Example 1, it was found that the depth which could be heated to 800°C or higher in the small-diameter portion 53 could be increased by 1.5 mm, and the maximum value in the temperature of the shaft-shaped body 51 during the traverse hardening could be reduced by about 76°C.

Moreover, compared with the traverse hardening device 1A of Comparative Example, in the traverse hardening device 1 of Example 2, it was found that the depth which could be heated to 800°C or higher in the small-diameter portion 53 could be increased by 1.3 mm, and the maximum value in the temperature of the shaft-shaped body 51 during the traverse hardening could be reduced by about 153°C.

As described above, when the traverse hardening device according to the present invention is used, it is possible to increase the depth at which the small-diameter portion can be heated to a predetermined temperature or higher, and reduce the temperature of the end portion of the small-diameter portion.

### [Industrial Applicability]

According to the traverse hardening device and the traverse hardening method of the present invention, the secondary coil member can be easily removed from the shaft-shaped body in which the small-diameter portion is provided at the middle portion in the axial direction, and thus, an industrial utility value increases.

### [Brief Description of the Reference Symbols]

1, 2: traverse hardening device
11: primary coil member
16A, 16B: secondary first coil member (secondary coil member)
17A, 17B: secondary second coil member (secondary coil member)
20A, 20B: first support piece
21A, 21B: first connection piece
26A, 26B: second support piece
51,101: shaft-shaped body
52: main body portion
53: small-diameter portion
61A, 61B: tertiary coil member
64A, 64B: third support piece
65A, 65B: third connection piece
102: second small-diameter portion
C: axis
R1: diameter
S: traverse hardening method
S1: first disposition step (disposition step)
S5: first heating step (heating step)
S7: first separation step (separation step)
S11: second disposition step (disposition step)
S13: second heating step (heating step)

## Claims

1. A traverse hardening device (1, 2) for performing traverse hardening on a shaft-shaped body (51, 101), the shaft-shaped body including a main body portion (52) and a small-diameter portion (53) which is provided in a middle portion of the main body portion (52) in an axial direction (C) and has an outer diameter smaller than that of the main body portion, the traverse hardening device (1, 2) comprising:
a primary coil member (11) which is formed in an annular shape, through which a high frequency current flows, and into which the shaft-shaped body (51, 101) is inserted; and
a plurality of secondary coil members (16A-B, 17A-B), having an outer diameter smaller than an inner diameter of the primary coil member (11), which are disposed inside the primary coil member (11), on a radially outer side of the small-diameter portion of the shaft-shaped body (51, 101), and are disposed to be separated from each other in a circumferential direction.

2. The traverse hardening device (1, 2) according to claim 1,
wherein a diameter (R1) of an inscribed circle which is in contact with each outer surface of the plurality of secondary coil members (16A-B, 17A-B) facing an axis (C) of the main body portion (51, 101) is smaller than the outer diameter of the main body portion (52).

3. The traverse hardening device (1, 2) according to claim 1 or 2,
wherein a plurality of secondary first coil members (16A-B) and a plurality of secondary second coil members (17A-B) are provided as the plurality of secondary coil members,
wherein each of the plurality of secondary first coil members (16A-B) includes a first support piece (20A-B) extending from each of the plurality of secondary first coil members (16A-B) toward one side in the axial direction, and
wherein each of the plurality of secondary second coil members (17A-B) includes a second support piece (26A-B) extending from each of the plurality of secondary second coil members (17A-B) toward the other side in the axial direction.

4. The traverse hardening device (2) according to any one of claims 1 to 3,
wherein the shaft-shaped body (101) includes a second small-diameter portion (102) which is provided in the small-diameter portion (53) and has an outer diameter smaller than that of the small-diameter portion (53),
wherein the traverse hardening device (2) further comprises:
a first connection piece (21A-B) which extends radially outward from each of the plurality of first support pieces (20A-B);
a plurality of tertiary coil members (61A-B) which are disposed radially inside the plurality of secondary coil members (16A-B), on the radially outer side of the second small-diameter portion (102) of the shaft-shaped portion (101), and are disposed to be separated from each other in the circumferential direction;
a third support piece (64A-B) which is provided in each of the plurality of tertiary coil members (61A-B) and extends from each of the plurality of tertiary coil members (61A-B) toward one side in the axial direction; and
a third connection piece (65A-B) which extends radially outward from each of the plurality of third support pieces (64A-B), and
wherein circumferential positions of the plurality of third connection pieces (65A-B) are different from circumferential positions of the plurality of first connection pieces (21A-B).

5. A traverse hardening method (S) for performing traverse hardening on a shaft-shaped body (51, 101), the shaft-shaped body including a main body portion (52) and a small-diameter portion (53) which is provided in a middle portion of the main body portion (52) in an axial direction and has an outer diameter smaller than that of the main body portion (52), the traverse hardening method (S) comprising:
a disposition step of disposing a plurality of secondary coil members (16A-B, 17A-B) radially outside the small-diameter portion (53) so that the secondary coil members (16A-B, 17A-B) are separated from each other in a circumferential direction; and
a heating step of moving a primary coil member (11), which is formed in an annular shape, through which a high frequency current flows, and into which the shaft-shaped body (51, 101) is inserted, from an end portion of the shaft-shaped body (51, 101) toward the small-diameter portion (53) in the axial direction with respect to the shaft-shaped body (51, 101), disposing at least a portion of each of the plurality of secondary coil members (16A-B, 17A-B) in the primary coil member (11), wherein the plurality of secondary coil members (16A-B, 17A-B) have an outer diameter smaller than an inner diameter of the primary coil member (11), and heating the small-diameter portion (53) by induction heating.

6. The traverse hardening method (S) according to claim 5,
wherein in the disposition step, the plurality of secondary coil members (16A-B, 17A-B) are disposed so that an outer diameter (R1) of an inscribed circle which is in contact with each outer surface of the plurality of secondary coil members (16A-B, 17A-B) facing an axis (C) of the main body portion (52) is smaller than a diameter of the main body portion (52).

7. The traverse hardening method (S) according to claim 5 or 6, further comprising:
as the disposition step, a first disposition step (S1) of disposing a plurality of secondary first coil members (16A-B) as the plurality of secondary coil members, which respectively have first support pieces (20A-B) extending toward one side in the axial direction which is a movement direction of the primary coil member (11) with respect to the shaft-shaped body (51, 101), on an end portion of the small-diameter portion (53) on the other side in the axial direction;
as the heating step, a first heating step (S5) of heating the end portion of the small-diameter portion (53) on the other side in the axial direction when at least a portion of each of the plurality of secondary first coil members (16A-B) is disposed in the primary coil member (11) which relatively moves to one side in the axial direction with respect to the shaft-shaped body (51, 101);
after the first heating step (S5), a separation step (S7) of moving the plurality of secondary first coil members (16A-B) with respect to the primary coil member (11) to one side in the axial direction using the first support piece (20A-B) to separate the plurality of secondary first coil members (16A-B) radially outward from the small-diameter portion (53);
as the disposition step, a second disposition step (S11) of disposing a plurality of secondary second coil members (17A-B) as the plurality of secondary coil members, which respectively have second support pieces (26A-B) extending toward the other side in the axial direction, on the end portion of the small-diameter portion (53) on one side in the axial direction through an inside of the primary coil member (11) from the other side of the primary coil member (11) in the axial direction; and
as the heating step, a second heating step (S13) of heating the end portion of the small-diameter portion (53) on one side in the axial direction when at least a portion of each of the plurality of secondary second coil members (17A-B) is disposed in the primary coil member (11) which relatively moves to one side in the axial direction with respect to the shaft-shaped body (51, 101).

## Patentansprüche

1. Querhärtevorrichtung (1, 2) zum Durchführen von Querhärten an einem wellenförmigen Körper (51, 101), wobei der wellenförmige Körper einen Hauptkörperabschnitt (52) und einen Abschnitt (53) mit kleinem Durchmesser aufweist, der in einem mittleren Abschnitt des Hauptkörperabschnitts (52) in einer axialen Richtung (C) vorgesehen ist und einen Außendurchmesser hat, der kleiner ist als der des Hauptkörperabschnitts, wobei die Querhärtevorrichtung (1, 2) umfasst:
ein primäres Spulenelement (11), das ringförmig ausgebildet ist, durch das ein Hochfrequenzstrom fließt und in das der wellenförmige Körper (51, 101) eingesetzt ist; und eine Vielzahl von sekundären Spulenelementen (16A-B, 17A-B) mit einem Außendurchmesser, der kleiner ist als ein Innendurchmesser des primären Spulenelements (11), die innerhalb des primären Spulenelements (11) an einer radial äußeren Seite des Abschnitts mit kleinem Durchmesser des wellenförmigen Körpers (51, 101) angeordnet sind und so angeordnet sind, dass sie in einer Umfangsrichtung voneinander getrennt sind.

2. Querhärtevorrichtung (1, 2) nach Anspruch 1,
wobei ein Durchmesser (R1) eines Inkreises, der in Kontakt mit jeder Außenfläche der Vielzahl der sekundären Spulenelemente (16A-B, 17A-B) steht, die einer Achse (C) des Hauptkörperabschnitts (51, 101) zugewandt sind, kleiner ist als der Außendurchmesser des Hauptkörperabschnitts (52).

3. Querhärtevorrichtung (1, 2) nach Anspruch 1 oder 2,
wobei eine Vielzahl von sekundären ersten Spulenelementen (16A-B) und eine Vielzahl von sekundären zweiten Spulenelementen (17A-B) als die Vielzahl von sekundären Spulenelementen vorgesehen sind,
wobei jedes der Vielzahl der sekundären ersten Spulenelemente (16A-B) ein erstes Stützteil (20A-B) aufweist, das sich von jedem der Vielzahl der sekundären ersten Spulenelemente (16A-B) zu einer Seite in der axialen Richtung erstreckt, und
wobei jedes der Vielzahl von sekundären zweiten Spulenelementen (17A-B) ein zweites Stützteil (26A-B) aufweist, das sich von jedem der Vielzahl der sekundären zweiten Spulenelemente (17A-B) in der axialen Richtung zur anderen Seite hin erstreckt.

4. Querhärtevorrichtung (2) nach einem der Ansprüche 1 bis 3,
wobei der wellenförmige Körper (101) einen zweiten Abschnitt (102) mit kleinem Durchmesser aufweist, der in dem Abschnitt (53) mit kleinem Durchmesser vorgesehen ist und einen Außendurchmesser hat, der kleiner als der des Abschnitts (53) mit kleinem Durchmesser ist,
wobei die Querhärtevorrichtung (2) ferner umfasst:
ein erstes Verbindungsstück (21A-B), das sich von jedem der Vielzahl der ersten Stützteile (20A-B) radial nach außen erstreckt;
eine Vielzahl von tertiären Spulenelementen (61A-B), die radial innerhalb der Vielzahl von sekundären Spulenelementen (16A-B) auf der radial äußeren Seite des zweiten Abschnitts (102) mit kleinem Durchmesser des wellenförmigen Abschnitts (101) angeordnet sind, und die so angeordnet sind, dass sie in der Umfangsrichtung voneinander getrennt sind;
ein drittes Stützteil (64A-B), das in jedem der Vielzahl der tertiären Spulenelemente (61A-B) vorgesehen ist und sich von jedem der Vielzahl der tertiären Spulenelemente (61A-B) zu einer Seite in der axialen Richtung erstreckt; und
ein drittes Verbindungsstück (65A-B), das sich von jedem der Vielzahl der dritten Stützteile (64A-B) radial nach außen erstreckt, und
wobei die Umfangspositionen der Vielzahl der dritten Verbindungsstücke (65A-B) von den Umfangspositionen der Vielzahl der ersten Verbindungsstücke (21A-B) verschieden sind.

5. Querhärteverfahren (S) zum Durchführen von Querhärten an einem wellenförmigen Körper (51, 101), wobei der wellenförmige Körper einen Hauptkörperabschnitt (52) und einen Abschnitt (53) mit kleinem Durchmesser aufweist, der in einem mittleren Abschnitt des Hauptkörperabschnitts (52) in einer axialen Richtung vorgesehen ist und einen Außendurchmesser hat, der kleiner ist als der des Hauptkörperabschnitts (52), wobei das Querhärteverfahren (S) umfasst:
einen Anordnungsschritt des Anordnens einer Vielzahl von sekundären Spulenelementen (16A-B, 17A-B) radial außerhalb des Abschnitts (53) mit kleinem Durchmesser, so dass die sekundären Spulenelemente (16A-B, 17A-B) voneinander in einer Umfangsrichtung getrennt sind; und
einen Erwärmungsschritt des Bewegens eines primären Spulenelements (11), das in einer ringförmigen Form ausgebildet ist, durch das ein Hochfrequenzstrom fließt und in das der wellenförmige Körper (51, 101) eingesetzt ist, von einem Endabschnitt des wellenförmigen Körpers (51, 101) in Richtung des Abschnitts (53) mit kleinem Durchmesser in der axialen Richtung in Bezug auf den wellenförmigen Körper (51, 101), Anordnen von mindestens einem Teil von jedem von der Vielzahl von sekundären Spulenelementen (16A-B, 17A-B) in dem primären Spulenelement (11), wobei die Vielzahl von sekundären Spulenelemente (16A-B, 17A-B) einen Außendurchmesser haben, der kleiner als ein Innendurchmesser des primären Spulenelements (11) ist, und der Abschnitt (53) mit kleinem Durchmesser durch Induktionserwärmung erwärmt wird.

6. Querhärteverfahren (S) nach Anspruch 5,
wobei in dem Anordnungsschritt die Vielzahl der sekundären Spulenelemente (16A-B, 17A-B) so angeordnet werden, dass ein Außendurchmesser (R1) eines Inkreises, der in Kontakt mit jeder Außenfläche der Vielzahl der sekundären Spulenelemente (16A-B, 17A-B) steht, die einer Achse (C) des Hauptkörperabschnitts (52) zugewandt ist, kleiner ist als ein Durchmesser des Hauptkörperabschnitts (52).

7. Querhärteverfahren nach Anspruch 5 oder 6, ferner umfassend:
als den Anordnungsschritt einen ersten Anordnungsschritt (S1) des Anordnens einer Vielzahl von sekundären ersten Spulenelementen (16A-B) als die Vielzahl von sekundären Spulenelementen, die jeweils erste Stützsteile (20A-B) aufweisen, die sich in der axialen Richtung, die eine Bewegungsrichtung des primären Spulenelements (11) in Bezug auf den wellenförmigen Körper (51, 101) ist, zu einer Seite hin erstrecken, an einem Endabschnitt des Abschnitts (53) mit kleinem Durchmesser auf der anderen Seite in der axialen Richtung;
als den Erwärmungsschritt einen ersten Erwärmungsschritt (S5) des Erwärmens des Endabschnitts des Abschnitts (53) mit kleinem Durchmesser auf der anderen Seite in der axialen Richtung, wenn mindestens ein Abschnitt von jeder der Vielzahl von sekundären ersten Spulenelementen (16A-B) in dem primären Spulenelement (11) angeordnet ist, das sich relativ zu einer Seite in der axialen Richtung in Bezug auf den wellenförmigen Körper (51, 101) bewegt;
nach dem ersten Erwärmungsschritt (S5) einen Trennungsschritt (S7) des Bewegens der Vielzahl von sekundären ersten Spulenelementen (16A-B) in Bezug auf das primäre Spulenelement (11) zu einer Seite in der axialen Richtung unter Verwendung des ersten Stützteils (20A-B), um die Vielzahl von sekundären ersten Spulenelementen (16A-B) radial nach außen von dem Abschnitt (53) mit kleinem Durchmesser zu trennen;
als den Anordnungsschritt einen zweiten Anordnungsschritt (S11) des Anordnens einer Vielzahl von sekundären zweiten Spulenelementen (17A-B) als die Vielzahl von sekundären Spulenelementen, die jeweils zweite Stützstücke (26A-B) aufweisen, die sich zu der anderen Seite in der axialen Richtung erstrecken, an dem Endabschnitt des Abschnitts (53) mit kleinem Durchmesser auf einer Seite in der axialen Richtung durch eine Innenseite des primären Spulenelements (11) von der anderen Seite des primären Spulenelements (11) in der axialen Richtung; und
als den Erwärmungsschritt einen zweiten Erwärmungsschritt (S13) des Erwärmens des Endabschnitts des Abschnitts (53) mit kleinem Durchmesser auf einer Seite in der axialen Richtung, wenn mindestens ein Abschnitt von jedem der Vielzahl von sekundären zweiten Spulenelementen (17A-B) in dem primären Spulenelement (11) angeordnet ist, das sich relativ zu einer Seite in der axialen Richtung in Bezug auf den wellenförmigen Körper (51, 101) bewegt.

## Revendications

1. Dispositif de durcissement traversant (1, 2) pour réaliser le durcissement traversant sur un corps en forme d'arbre (51, 101), le corps en forme d'arbre comprenant une partie de corps principal (52) et une partie de petit diamètre (53) qui est prévue dans une partie centrale de la partie de corps principal (52) dans une direction axiale (C) et a un diamètre externe inférieur à celui de la partie de corps principal, le dispositif de durcissement traversant (1, 2) comprenant :
un élément hélicoïdal principal (11) qui est formé dans une forme annulaire, à travers lequel un courant à haute fréquence circule, et dans lequel le corps en forme d'arbre (51, 101) est inséré ; et
une pluralité d'éléments hélicoïdaux secondaires (16A-B, 17A-B), ayant un diamètre externe inférieur à un diamètre interne de l'élément hélicoïdal principal (11), qui sont disposés à l'intérieur de l'élément hélicoïdal principal (11), sur un côté radialement externe de la partie de petit diamètre du corps en forme d'arbre (51, 101) et sont disposés pour être séparés les uns des autres dans une direction circonférentielle.

2. Dispositif de durcissement transversal (1, 2) selon la revendication 1,
dans lequel un diamètre (R1) d'un cercle inscrit qui est en contact avec chaque surface externe de la pluralité d'éléments hélicoïdaux secondaires (16A-B, 17A-B) faisant face à un axe (C) de la partie de corps principal (51, 101) est inférieur au diamètre externe de la partie de corps principal (52).

3. Dispositif de durcissement transversal (1, 2) selon la revendication 1 ou 2,
dans lequel une pluralité de premiers éléments hélicoïdaux secondaires (16A-B) et une pluralité de deuxièmes éléments hélicoïdaux secondaires (17A-B) sont prévues en tant que pluralité d'éléments hélicoïdaux secondaires,
dans lequel chacun de la pluralité de premiers éléments hélicoïdaux secondaires (16A-B) comprend une première pièce de support (20A-B) s'étendant à partir de chacun de la pluralité de premiers éléments hélicoïdaux secondaires (16A-B) vers un côté dans la direction axiale, et
dans lequel chacun de la pluralité de deuxièmes éléments hélicoïdaux secondaires (17A-B) comprend une deuxième pièce de support (26A-B) s'étendant à partir de chacun de la pluralité de deuxièmes éléments hélicoïdaux secondaires (17A-B) vers l'autre côté dans la direction axiale.

4. Dispositif de durcissement transversal (2) selon l'une quelconque des revendications 1 à 3,
dans lequel le corps en forme d'arbre (101) comprend une deuxième partie de petit diamètre (102) qui est prévue dans la partie de petit diamètre (53) et a un diamètre externe inférieur à celui de la partie de petit diamètre (53),
dans lequel le dispositif de durcissement traversant (2) comprend en outre :
une première pièce de raccordement (21A-B) qui s'étend radialement vers l'extérieur à partir de chacune de la pluralité de premières pièces de support (20A-B),
une pluralité d'éléments hélicoïdaux tertiaires (61A-B) qui sont disposés radialement à l'intérieur de la pluralité d'éléments hélicoïdaux secondaires (16A-B), sur le côté radialement externe de la deuxième partie de petit diamètre (102) de la partie en forme d'arbre (101) et sont disposés pour être séparés les uns des autres dans la direction circonférentielle ;
une troisième pièce de support (64A-B) qui est prévue dans chacun de la pluralité d'éléments hélicoïdaux tertiaires (61A-B) et s'étend à partir de chacun de la pluralité d'éléments hélicoïdaux tertiaires (61A-B) vers un côté dans la direction axiale, et
une troisième pièce de raccordement (65A-B) qui s'étend radialement vers l'extérieur à partir de chacune de la pluralité de troisièmes pièces de support (64A-B), et
dans lequel les positions circonférentielles de la pluralité de troisièmes pièces de raccordement (65A-B) sont différentes des positions circonférentielles de la pluralité de premières pièces de raccordement (21A-B).

5. Procédé de durcissement traversant (S) pour réaliser le durcissement traversant sur un corps en forme d'arbre (51, 101), le corps en forme d'arbre comprenant une partie de corps principal (52) et une partie de petit diamètre (53) qui est prévue dans une partie centrale de la partie de corps principal (52) dans une direction axiale et a un diamètre externe inférieur à celui de la partie de corps principal (52), le procédé de durcissement traversant (S) comprenant :
une étape de disposition pour disposer une pluralité d'éléments hélicoïdaux secondaires (16A-B, 17A-B) radialement à l'extérieur de la partie de petit diamètre (53) de sorte que les éléments hélicoïdaux secondaires (16A-B, 17A-B) sont séparés les uns des autres dans une direction circonférentielle ; et
une étape de chauffage pour déplacer un élément hélicoïdal principal (11), qui est formé dans une forme annulaire, à travers lequel un courant à haute fréquence circule, et dans lequel le corps en forme d'arbre (51, 101) est inséré, à partir d'une partie d'extrémité du corps en forme d'arbre (51, 101) vers la partie de petit diamètre (53) dans la direction axiale par rapport au corps en forme d'arbre (51, 101), pour disposer au moins une partie de chacun de la pluralité d'éléments hélicoïdaux secondaires (16A-B, 17A-B) dans l'élément hélicoïdal principal (11), dans lequel la pluralité d'éléments hélicoïdaux secondaires (16A-B, 17A-B) ont un diamètre externe inférieur à un diamètre interne de l'élément hélicoïdal principal (11) et pour chauffer la partie de petit diamètre (53) par chauffage par induction.

6. Procédé de durcissement traversant (S) selon la revendication 5,
dans lequel, à l'étape de disposition, la pluralité d'éléments hélicoïdaux secondaires (16A-B, 17A-B) sont disposés de sorte qu'un diamètre externe (R1) d'un cercle inscrit qui est en contact avec chaque surface externe de la pluralité d'éléments hélicoïdaux secondaires (16A-B, 17A-B) faisant face à un axe (C) de la partie de corps principal (52) est inférieur à un diamètre de la partie de corps principal (52).

7. Procédé de durcissement traversant (S) selon la revendication 5 ou 6, comprenant en outre :
en tant qu'étape de disposition, une première étape de disposition (S1) pour disposer une pluralité de premiers éléments hélicoïdaux secondaires (16A-B) en tant que pluralité d'éléments hélicoïdaux secondaires, qui ont respectivement des premières pièces de support (20A-B) s'étendant vers un côté dans la direction axiale qui est une direction de déplacement de l'élément hélicoïdal principal (11) par rapport au corps en forme d'arbre (51, 101), sur une partie d'extrémité de la partie de petit diamètre (53) de l'autre côté dans la direction axiale ;
en tant qu'étape de chauffage, une première étape de chauffage (S5) pour chauffer la partie d'extrémité de la partie de petit diamètre (53) de l'autre côté dans la direction axiale lorsqu'au moins une partie de chacun de la pluralité de premiers éléments hélicoïdaux secondaires (16A-B) est disposée dans l'élément hélicoïdal principal (11) qui se déplace relativement vers un côté dans la direction axiale par rapport au corps en forme d'arbre (51, 101),
après la première étape de chauffage (S5), une étape de séparation (S7) pour déplacer la pluralité de premiers éléments hélicoïdaux secondaires (16A-B) par rapport à l'élément hélicoïdal principal (11) vers un côté dans la direction axiale en utilisant la première pièce de support (20A-B) afin de séparer la pluralité de premiers éléments hélicoïdaux secondaires (16A-B) radialement à l'extérieur de la partie de petit diamètre (53) ;
en tant qu'étape de disposition, une deuxième étape de dispositif (S11) pour disposer une pluralité de deuxièmes éléments hélicoïdaux secondaires (17A-B) en tant que pluralité d'éléments hélicoïdaux secondaires, qui ont respectivement des deuxièmes pièces de support (26A-B) s'étendant vers l'autre côté, dans la direction axiale, sur la partie d'extrémité de la partie de petit diamètre (53) d'un côté dans la direction axiale à travers un intérieur de l'élément hélicoïdal principal (11) à partir de l'autre côté de l'élément hélicoïdal principal (11) dans la direction axiale, et
en tant qu'étape de chauffage, une deuxième étape de chauffage (S13) pour chauffer la partie d'extrémité de la partie de petit diamètre (53) d'un côté dans la direction axiale lorsqu'au moins une partie de chacun de la pluralité de deuxièmes éléments hélicoïdaux secondaires (17A-B) est disposée dans l'élément hélicoïdal principal (11) qui se déplace relativement vers un côté dans la direction axiale par rapport au corps en forme d'arbre (51, 101).
